# EUROPÄISCHE PATENTSCHRIFT

(11) **EP 1 702 397 B1**
(45) Veröffentlichungstag und Bekanntmachung des Hinweises auf die Patenterteilung: **08.09.2010**
(21) Anmeldenummer: 04805056.1
(22) Anmeldetag: 30.12.2004
(51) Int. Cl.: H02K 1/24

(54) **KLAUENPOLLÄUFER FÜR EINE ELEKTRISCHE MASCHINE**
CLAW POLE ROTOR FOR AN ELECTRICAL MACHINE
ROTOR A POLES A GRIFFES POUR MACHINE ELECTRIQUE

(30) Priorität: 02.01.2004 DE 102004001844
(43) Veröffentlichungstag der Anmeldung: 20.09.2006
(73) Patentinhaber: ROBERT BOSCH GMBH, 70442 Stuttgart (DE)
(72) Erfinder: LUTZ, Hans-Joachim, 68623 Lampertheim (DE); MEYER, Reinhard, 74321 Bietigheim-Bissingen (DE); RADEMACHER, Guenter, 70794 Filderstadt-Harthausen (DE)
(86) Internationale Anmeldenummer: PCT/EP2004/053731
(87) Internationale Veröffentlichungsnummer: WO 2005/067123

(56) Entgegenhaltungen:
- EP-A- 1 179 879
- EP-A- 1 331 717
- JP-A- 51 087 705
- PATENT ABSTRACTS OF JAPAN Bd. 015, Nr. 470 (E-1139), 28. November 1991 (1991-11-28) -& JP 03 203537 A (MITSUBA ELECTRIC MFG CO LTD), 5. September 1991 (1991-09-05)

## Beschreibung

### Stand der Technik

Aus der Europäischen Patentschrift EP 0 346 346 B1 ist eine elektrische Maschine mit einem Klauenpolläufer bekannt. Dieser Klauenpolläufer weist zwei Pohäder auf, die von einem Plattenbereich ausgehende, je eine Polwurzel aufweisende Klauenpole tragen. Die Klauenpole wechseln sich am Umfang des Klauenpolläufers ab, wobei zwischen den Klauenpolen freie Zwischenräume angeordnet sind. Ein jeder Klauenpol hat eine nach radial außen gerichtete zylindemiantelförmige Oberfläche, durch die eine Drehachse des Klauenpolläufers bestimmt ist. Ein jeder Klauenpol weist eine von der zylindermantelförmigen Oberfläche ausgehende Fase auf, die sich einerseits in einer Umfangsrichtung und andererseits in eine Kantenrichtung des Klauenpols erstreckt. Mit Hilfe der an diesem Klauenpolläufer vorgesehenen Fasen ist zwar die Verringerung magnetischer Geräusche möglich, die durch die Wechselwirkung zwischen Klauenpolläufer und Ständer entstehen. Des Weiteren ist bei dieser dort gezeigten Ausführung jedoch nachteilig, dass der verhältnismäßig große Winkelbereich über die gesamte Länge des Klauenpols zu verhältnismäßig großen Leistungsverlusten des Drehstromgenerators führt. Dies hängt damit zusammen, dass der mittlere Luftspalt einer einzelnen Klaue durch diese Fase verhältnismäßig groß ist.

### Vorteile der Erfindung

Der erfindungsgemäße Klauenpolläufer für eine elektrische Maschine mit den Merkmalen des Hauptanspruchs hat den Vorteil, dass durch die Beschränkung dieser verhältnismäßig steilen Fase auf einen kleinen Längenabschnitt eines einzelnen Klauenpols einerseits der mittlere Luftspalt zwischen Ständer und Klauenpol verhältnismäßig klein ist und dadurch die Leistung nur wenig negativ beeinflusst wird und andererseits durch die Einschränkung des Neigungswinkels zusätzliche Geräuscheffekte, die durch die Wechselbeziehung, verursacht durch das Drehen des Klauenpolläufers im Ständer mit Wicklung hervorgerufen werden, verringert werden. Diese Geräuscheffekte rühren daher, dass die im Ständereisen eingelegte Wicklung üblicherweise unmittelbar vor den axialen Stirnflächen des Ständers Öffnungen aufweist.

Durch die in den Unteransprüchen aufgeführten Maßnahmen sind vorteilhafte Weiterbildungen des Klauenpolläufers nach dem Hauptanspruch möglich.

Eine weitere Verbesserung des Wirkungsgrads ist dadurch gegeben, dass der Mittenabschnitt der Fase ein Drittel der axialen Länge der Fase beträgt. Einerseits wird dadurch der mittlere Luftspalt weiter verkleinert, sodass die Leistung steigt, andererseits ist der Herstellvorgang vereinfacht, da die Kraft zur Anformung dieser Fase, bspw. durch Schmieden, verringert ist.

Zur besonders guten Abstimmung dieser Fase ist vorgesehen, dass diese in Kantenrichtung eine Mitte hat, die nahe der Übergangsebene von der Polwurzel zum freikragenden Teil des Klauenpols liegt.

Besonders günstig ist es, wenn die Fase sich in Drehachsenrichtung bis zu 5 mm auf dem freikragenden Teil des Klauenpol erstreckt. Eine weitere Verbesserung kann dann erzielt werden, wenn diese bis zu 2 mm auf dem freikragenden Teil des Klauenpol erstreckt ist. Dieser Längenabschnitt von 2 mm bzw. 5 mm, der sich dann üblicherweise noch unter dem Ständereisen befindet, trägt dazu bei, Effekte zwischen Ständereisen und Klauenpol abzuschwächen und andererseits den mittleren Luftspalt in günstigen Grenzen zu halten. Hinsichtlich der Breite der Fase hat sich herausgestellt, dass diese im günstigen Fall eine Breite zwischen 4 mm und 6 mm hat. In ähnlicher Weise beträgt die Länge der Fase günstigenfalls zwischen 4 mm und 6 mm, damit die Leistung der Maschine gut ist. Ist die Fase eine Ebene, die parallel zur Drehachsenrichtung ausgerichtet ist, so lässt sich ein verhältnismäßig einfaches Werkzeug zur Anformung der Fase verwenden. Dies gilt bspw. für den Fall, dass die Fase angeschmiedet werden soll. Einerseits kann dann die Werkzeugrichtung senkrecht zur Drehachsenrichtung erfolgen und andererseits ist das entsprechende Werkzeug ohne spitze Winkel ausgeführt. Dies erhöht die Standzeit eines entsprechenden Schmiedewerkzeugs.

Es ist des Weiteren vorgesehen, dass zwischen der Fase und der zylindermantelförmigen Oberfläche eines Klauenpols und damit ein Übergang zwischen der Fase und der zylindermantelförmigen Oberfläche in Richtung zur Spitze eines Klauenpols ein stufenförmiger Übergang ist. Einerseits führt diese Stufe zu einer begrenzten Länge der Fase, so dass der mittlere Luftspalt nicht zu groß ist und andererseits führt diese Begrenzung dazu, dass auch das Werkzeug nur eine begrenzte Oberfläche aufweisen muss. Für einen Schmiedevorgang bedeutet dies, dass das Schmiedewerkzeug verhältnismäßig klein sein kann. Der Fertigungsaufwand wird dadurch verringert.

Des Weiteren ist ein Drehstromgenerator vorgesehen, der einen Klauenläufer nach der vorbeschriebenen Art aufweist. Dabei soll die Fase derart unter das Ständereisen ragen, dass ein Teil der Fase außerhalb des Ständereisens verbleibt. Dies führt zu dem bereits erwähnten Effekt, dass Gerauschanregungen, verursacht durch Lücken in der Wicklung in der Nähe des Ständereisens, vermieden bzw. verringert werden. Ein Mindesterfordernis ist dabei, dass die Fase mindestens 1 mm unter das Ständereisen ragt. Bezüglich dieser Fase spielt weiterhin eine Rolle, dass diese Fase auf einer bestimmten Seite eines jeden Klauenpols angeordnet ist. Bei Drehstromgeneratoren, wie auch bei vielen anderen elektrischen Maschinen, definiert man eine bestimmte Drehrichtung, in der der Klauenpolläufer zur Stromerzeugung gedreht wird. Ein jeder Klauenpol hat dabei eine Kante, die in Drehrichtung orientiert ist und als auflaufende Kante bezeichnet wird. Des Weiteren hat ein jeder Klauenpol eine Kante, die gegen die Drehrichtung orientiert ist und entsprechend als ablaufende Kante bezeichnet wird. Die Fase soll in diesem Fall auf der Seite des Klauenpols angeordnet sein, welche die in die Drehrichtung orientierte Kante trägt.

### Zeichnungen

In den Zeichnungen ist ein Ausführungsbeispiel eines erfindungsgemäßen Klauenpolläufers sowie ein Drehstromgenerator mit einem erfindungsgemäßen Klauenpolläufer dargestellt. Es zeigen:
- Figur 1: einen Längsschnitt durch einen Drehstromgenerator,
- Figur 2a: eine Ansicht eines zur Hälfte dargestellten Polrads,
- Figur 2b: einen Schnitt durch das Polrad aus Figur 2a,
- Figur 3: eine Draufsicht auf einen Klauenpol des Polrads aus Figur 2a
- Figur 4: eine Detailansicht einer Fase,
- Figur 5: einen Querschnitt durch eine Fase,
- Figur 6: einen zweiten Querschnitt durch eine Fase,
- Figur 7: eine Seitenansicht auf einen Klauenpol im Bereich der Fase,
- Figur 8: in schematischer Ansicht die Relativlage zwischen Ständereisen des Drehstromgenerators und Klauenpol, wobei die an sich zum Ständer gerichtete Oberfläche des Klauenpols in die Blattebene gedreht ist, um die Verständlichkeit zu verbessern.

### Beschreibung

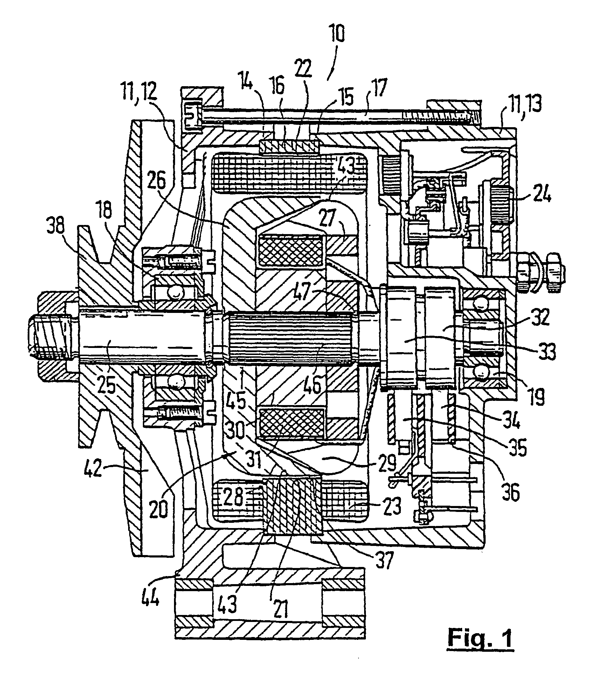

Bei dem in Figur 1 gezeigten Wechselstromgenerator 10 handelt es sich um einen Drehstromgenerator, wie er heute in Kraftfahrzeugen eingebaut ist. Die Anwendung des Erfindungsgegenstandes ist jedoch nicht auf Drehstromgeneratoren in Topfbauart gemäß der Abbildung beschränkt, sondern ist allgemein auf Wechselstromgeneratoren anwendbar.

Dieser Wechselstromgenerator bzw. Drehstromgenerator 10 besitzt als metallisches Gehäuse zwei Lagerschilde 12 und 13, zwischen deren offenen Stirnbereichen 14 und 15 ein Ständer 16 eingespannt ist. Zum Verbinden der beiden Lagerschilde 12 und 13 mit dem Ständer 16 dienen als Spannelemente 17 Stehbolzen, welche in den beiden Lagerschilden 12 und 13 festgelegt sind. Die Lagerschilde 12 und 13 entfalten jeweils ein Kugellager 18 bzw. 19 zur drehbaren Aufnahme eines Klauenpolläufers 20. Der Ständer setzt sich aus Blechen (Lamellen) zusammen, die aus magnetisierbarem Eisen bestehen und zu einem festen Blechpaket zusammengepresst sind. Der im Wesentlichen ringförmige Ständer 16 ist in seiner Ständerbohrung 21 mit Nuten 22 zur Aufnahme von Wechselstromwicklungen 23 versehen. Die Wechselstromwicklungen 23 sind bei diesem Drehstromgenerator 10 drei um elektrische 120° räumlich versetzte wellenförmige Wicklungen, die bei Betrieb des Wechselstromgenerators einen dreiphasigen nutzbaren Generatorstrom an einen am Wechselstromgenerator 10 befestigten, angedeuteten Gleichrichter 24 abgegeben. Der Gleichrichter 24 formt den Drehstrom im Gleichstrom um. Der Klauenpolläufer 20 setzt sich im Wesentlichen zusammen aus einer in den Kugellagern 18 und 19 drehbar aufgenommenen Rotorwelle 25, zwei auf dieser Rotorwelle 25 mit Abstand zueinander festgelegten Polrädern 26 und 27 mit ihren Klauenpolen 28 bzw. 29, einem zwischen den beiden Polrädern 26 und 27 angeordneten, auch auf der Rotorwelle 25 aufgeschobenen Polkern 30 aus magnetisierbarem Material, einer auf den Polkern 30 aufgewickelten und von den beiden Polrädern 26 und 27 sowie den nahezu parallel zur Rotorwelle 25 verlaufenden Klauenpolen 28 und 29 umfassten Erregerwicklung 31 und darüber hinaus aus zwei ebenfalls auf der Rotorwelle 25 nebeneinander mit Abstand festgelegten Schleifringen 32 und 33, die mit je einem Ende der Erregerwicklung 31 elektrisch verbunden sind. Auf die beiden Schleifringe 32 und 33 drückt je eine federbelastete Schleifbürste 34 bzw. 35, die in einem beiden gemeinsamen Bürstenhalter 36 geführt sind und die der mit dem Klauenpolläufer 20 umlaufenden Erregerwicklung 31 den Erregerstrom zuführen. Der aus Kunststoff bestehende Bürstenhalter 36 ist am Lagerschild 13 festgelegt. Je stärker der Erregerstrom und je größer die Drehzahl des Klauenpolläufers 20 ist, umso höher ist die im Drehstromgenerator erzeugte Spannung. Der der Erregerwicklung 31 zugeführte Erregerstrom wird von einem nicht dargestellten, zumeist am Wechselstromgenerator 10 befestigten Spannungsregler derart bemessen, dass die Generatorspannung über den gesamten Drehzahlbereich des Wechselstromgenerators bzw. des betreffenden nicht dargestellten Fahrzeugmotors annähernd konstant bleibt, und zwar unabhängig von Belastung und Drehzahl. Der Klauenpolläufer 20 hat an jedem seiner beiden Polräder 26 und 27 bevorzugt sechs Klauenpole 28 bzw. 29, die fingerförmig, jedoch mit isolierendem Abstand zueinander, ineinander greifen. Je ein Klauenpol 28 des Polrades 26 und ein daneben befindlicher Klauenpol 29 des Polrades 27 bilden gemeinsam ein Klauenpolpaar. Die beiden Klauenpole 28 und 29 haben unterschiedliche Polarität und bewirken ein Magnetfeld. Bei sich drehendem Klauenpolläufer 20 wird durch derartige Magnetfelder in den Wechselstromwicklungen 23 der nutzbare elektrische Strom des Wechselstromgenerators 10 erzeugt. Der zwischen den Klauenpolen 28 bzw. 29 und der Ständerbohrung 21 befindliche Luftspalt ist mit 37 bezeichnet.

Außerhalb des Gehäuses 11 des Wechselstromgenerators 10 ist auf der Rotorwelle 25 eine dem Antrieb des Wechselstromgenerators 10 dienende Riemenscheibe 38 angeordnet. Die Riemenscheibe 38 bildet dabei ein Bauteil mit einem Lüfter 42, der für den Transport von Kühlluft durch den Wechselstromgenerator 10 sorgt. Der Lüfter 42 kann alternativ aber auch ein separates Bauteil sein, welches sowohl außerhalb als auch innerhalb des metallischen Gehäuses 11 angeordnet sein kann. Es können aber auch innerhalb des Gehäuses beiderseits des Klauenpolläufers 20 je ein Lüfter 42 angeordnet sein (sogenannter Compact-Generator). Zur Befestigung des Wechselstromgenerators 10 am Kraftfahrzeugmotor ist das antriebsseitige Lagerschild 12 mit einem Schwenkarm 44 versehen. Ein zweites, für die genaue Fixierung des Wechselstromgenerators 10 zweckmäßiges Befestigungsmittel ist in der Figur 1 nicht dargestellt.

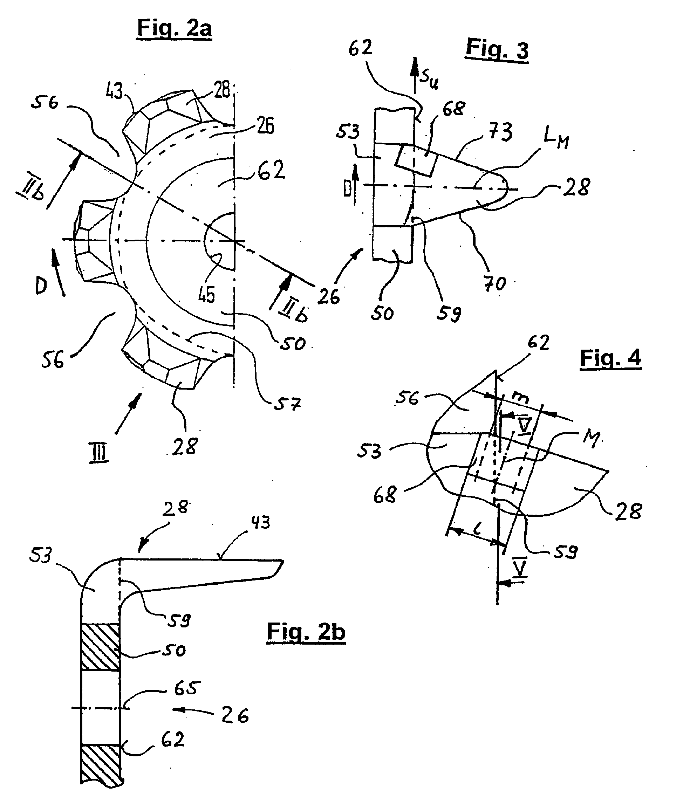

In Figur 2a ist das Polrad 26 mit seinen sechs auf seinem Umfang gleichmäßig verteilten Klauenpolen 28 gezeigt. Das Polrad 26 und die Klauenpole 28 sind im vorliegenden Beispiel aus einem einzigen Stück aus magnetisierbarem Material hergestellt, können aber auch aus mehreren Einzelteilen zusammengesetzt sein. Das Polrad 27 und sein Klauenpol 29 entspricht im Wesentlichen dem Polrad 26 mit seinen Klauenpolen 28. Im Zentrum des Polrades 26 befindet sich eine Mittenbohrung 45, in der die Rotorwelle 25 festgelegt ist. Die Festlegung des Polrades auf der Rotorwelle wird bevorzugt durch einen Rändelbereich 46 auf dem entsprechenden Bereich der Rotorwelle 25 und zusätzliche Verstemmbereiche 27 zwischen dem Rand der Mittenbohrung 45 des Polrads 26 und der Rotorwelle 25 bewirkt. An der linken Seite des Polrads 26 ist mit einem Pfeil und der Bezeichnung D die vorgesehene Drehrichtung bei der Erzeugung des Generatorstroms angegeben. In Figur 2a ist ein Plattenbereich 50 des Polrads 26 dargestellt. Von diesem Plattenbereich 50 ausgehend, erstreckt sich nach radial außen zunächst eine Polwurzel 53. Eine jede Polwurzel 53 eines jeden Klauenpols 28 ist von der benachbarten Polwurzel durch einen Zwischenraum 56 getrennt. Über die Polwurzel 53 stützt sich der freikragende Teil des Klauenpols 28 am Plattenbereich 50 ab. Zur klaren Definition von freikragendem Teil des Klauenpols 28, Polwurzel 53 und Plattenbereich 50 soll nachfolgende Definition gelten:

Der Plattenbereich 50 stellt die Verbindung zur Rotorwelle 25 her und endet radial außen dort, wo entweder der Zwischenraum 56 oder eine Polwurzel 53 beginnt. Der Beginn einer Polwurzel 53 nach radial außen wird dadurch bestimmt, dass zwischen zwei benachbarten Zwischenräumen 56 und deren radial innerster Erstreckung bzw. Lage ein Kreisbogen 57 einbeschrieben ist, Figur 2a. Da die innerste Erstreckung eines jeden Zwischenraums zusätzlich von seiner axialen Lage abhängig ist, kann sich eine komplexe Grenzfläche zwischen Polwurzel 53 und Plattenbereich 50 ergeben.

Eine axiale Grenze zwischen Polwurzel 53 und dem freikragenden Teil des Klauenpols 28 soll hier dadurch definiert sein, dass diese Grenze 59 eine nach radial außen theoretisch verlängerte Fläche ist, die von der zur Erregerwicklung 31 gerichteten Oberfläche 62 des Plattenbereichs 50 ausgeht. Die zylindrische Oberfläche 43 des Klauenpols 28 definiert eine Drehachse 65 (und umgekehrt), s. a. Figur 2b.

In Figur 3 ist eine Draufsicht auf einen Klauenpol 28 und den benachbarten Plattenbereich 50 dargestellt. Deutlich zu erkennen ist hier einmal der Plattenbereich 50, die Polwurzel 53, die Grenze 59 und der freikragende Teil des Klauenpols 28. Dieser Klauenpol 28 weist zwei wichtige Kanten auf, die sich anhand der Drehrichtung D des Polrads 26 näher bestimmen lassen. Die in Drehrichtung D orientierte auflaufende Kante ist hier als die Kante 73 bezeichnet. Die andere Kante 70 wird, da gegen die Drehrichtung D orientiert, als so genannte ablaufende Kante bezeichnet. Die Fase 68 befindet sich auf der Seite des Klauenpols 28, die die auflaufende Kante 73 trägt. Die Kante 73 definiert eine Kantenrichtung, in die sich die Fase in eine Richtung erstreckt. Die Drehrichtung D definiert eine Umfangsrichtung, in die sich die Fase 68 ebenfalls erstreckt.

Die Angabe, wonach sich die Fase 68 auch in Kantenrichtung erstreckt, bedeutet nicht, dass eine durch die Fase 68 gebildete Ebene zwingend parallel zur Kante 73 sein muss. Durch die beiden angegebenen Richtungen wird lediglich in geometrischer Hinsicht eine Ebene beschrieben.

Figur 4 zeigt in vergrößerter Ansicht ausschnittweise den Bereich des Klauenpols 28 bzw. der Polwurzel 53, der die nähere Umgebung der Fase 68 beschreibt. Die Fase 68 hat eine Länge 1, die in Kantenrichtung definiert ist. Des Weiteren hat die Fase 68 einen Mittenabschnitt m, der sich in die gleiche Richtung erstreckt. Die Fase 68 hat eine Mitte M, die bezogen auf die Länge 1 diese mittig teilt. Der Mittenabschnitt m ist zu der Mitte M symmetrisch angeordnet. Dies bedeutet, dass die verbleibenden Längenabschnitte beiderseits des Mittenabschnitts m gleich groß sind. Der Mittenabschnitt m und die beiden seitlichen Randabschnitte bilden somit die Gesamtlänge 1 der Fase 68. Die die Fase 68 begrenzenden Linien brauchen im übrigen nicht geradlinig zu sein. Ganz besonders die auf der Polwurzel 53 liegende Begrenzungslinie kann eine davon deutlich abweichende Form annehmen. Des Weiteren ist hier die Übergangsebene 59 von der Polwurzel 53 zum Klauenpol 28 dargestellt. Es ist dabei vorgesehen, dass die Übergangsebene 59 den Mittenabschnitt m im Bereich der Fase 68 schneidet. Der Mittenabschnitt m soll dabei 8/10 der axialen Länge 1 der Fase 68 betragen.

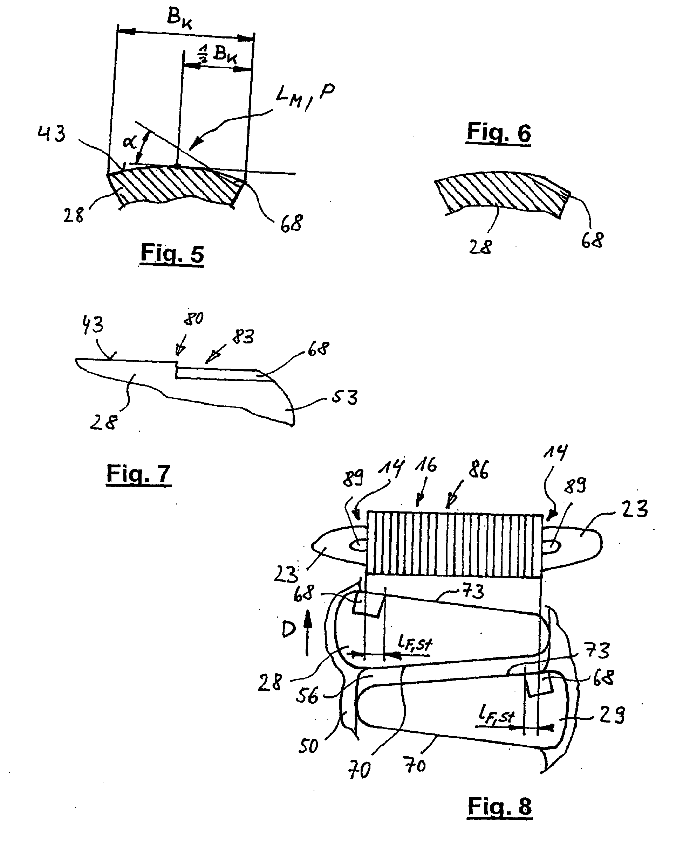

In Figur 5 ist ein Querschnitt durch den Klauenpol 28 dargestellt, siehe auch Figur 4. Wie in Figur 5 angedeutet, hat der Klauenpol in Umfangsrichtung eine Breite B_{K}. Ausgehend von der Breite B_{K} ist eine Mittellinie L_{M} definiert, die die Oberfläche eine Klauenpols 28 bei der halben Breite B_{K} halbiert. Die Mittellinie L_{M} kann - je nach Gestalt des Klauenpols 28 - parallel zur Drehachse 65 sein, siehe auch Figur 3. Die Mittellinie L_{M} ist in Figur 5 auch als Punkt P erkennbar. In diesen Punkt P kann in eine senkrecht zur Drehachse 65 orientierte Ebene (hier Blattebene der Figur 5) eine Tangente T einbeschrieben werden, sodass die Tangente T und die Fase 68 im Punkt P einen Neigungswinkel α einschließen, der eine Größe zwischen 15° und 25° aufweist.

Es ist somit ein Klauenpolläufer 20 für eine elektrischen Maschine 10 vorgesehen, insbesondere einen Drehstromgenerator, mit zwei Polrädern 26 bzw. 27, die von einem Plattenbereich 50 ausgehend mehrere Klauenpole 28 bzw. 29 tragen. Jeder Klauenpol 28 bzw. 29 weist je eine Polwurzel 53 auf. An einem Umfang des Klauenpolläufers 20 wechseln sich Klauenpole 28 bzw. 29 der Polräder 26 bzw. 27 ab. Zwischen den Klauenpolen 28 bzw. 29 sind Zwischenräume angeordnet. Ein jeder Klauenpol 28 bzw. 29 weist eine nach radial außen gerichtete zylindermantelförmige Oberfläche 43 auf, durch die eine Drehachse 65 bestimmt ist. Von der zylindermantelförmigen Oberfläche 43 ausgehend, erstreckt sich eine Fase 68 einerseits in eine Umfangsrichtung s_{U} und andererseits in eine Kantenrichtung eines Klauenpols 28. Die Fase 68 weist in Kantenrichtung einen Mittenabschnitt m auf, der eine die Polwurzel 53 und den freikragenden Klauenpol 28 abgrenzende Übergangsebene 59 schneidet. Es ist vorgesehen, dass der Mittenabschnitt m 8/10 der axialen Länge 1 der Fase 68 beträgt. Die Fase weist zusätzlich gemäß der zu Figur 5 angegebenen Definition einen Neigungswinkel α zwischen 15° und 25° auf, welcher zwischen der Oberfläche der Fase 68 und der Tangente T in einem Punkt P eingeschlossen ist. Der Punkt P teilt an seiner Lage bzw. Position bzgl. der Drehachse 65 einen Klauenpol 28 in Umfangsrichtung hälftig. Der Winkel α wird dabei in einer Ebene ermittelt, die senkrecht auf der Drehachse 65 angeordnet ist. Der Mittenabschnitt m kann nach einer weiteren Ausgestaltung der Erfindung auch nur 1/3 der axialen Länge 1 der Fase 68 betragen.

Die Fase 68 hat in Kantenrichtung eine Mitte M, die nahe der Übergangsebene 59 von der Polwurzel 53 zum freikragenden Teil des Klauenpol 28 bzw. 29 liegt.

Es ist des Weiteren vorgesehen, dass sich die Fase 68 in Drehachsenrichtung - ausgehend von der Übergangsebene 59 - mit einer Länge Iₐ erstreckt. Es ist vorgesehen, dass sich die Fase 68 in Drehachsenrichtung in erster Näherung mit einer Länge Iₐ von bis zu 5 mm, in zweiter Näherung mit 2 mm auf dem freikragenden Klauenpol 28 erstreckt.

Idealerweise hat die Fase 68 dabei eine Breite b_{F}, die zwischen 4 mm und 6 mm beträgt.

Die Fase 68 soll dabei eine Länge 1 zwischen 4 mm und 6 mm aufweisen.

Wie in Figur 5 dargestellt, soll die Fase 68 eine Ebene sein, die in einem Ausfuhrungsbeispiel parallel zur Drehachsenrichtung 65 orientiert ist.

Gemäß dem Ausführungsbeispiel nach Figur 6 kann die Fase 68 auch eine Ebene sein, die parallel zur Kantenrichtung 73 orientiert ist.

Für den Fall, dass die Fase 68 keine Ebene, sondern eine davon abweichende, hier als Freiformfläche bezeichnete Fläche ist, treffen die beiden zuletzt genannten Merkmale nicht zu. Alles weitere vorgenannte zur Fase 68 kann sich sowohl auf eine ebene Ausführung der Fase 68 als auch auf eine unebene Ausführung der Fase 68 beziehen.

Wie in Figur 7 dargestellt, ist in einer speziellen Ausführung vorgesehen, dass die Fase 68 in Richtung zum freien Ende eines Klauenpols 28 bzw. 29 einen stufenförmigen Übergang 80 in die zylindermantelförmige Oberfläche 43 aufweist. Die Fase 68 bildet somit mit der Stufe 80 eine Kerbe 83.

Es ist vorgesehen, dass die Fase 68 spanlos angeformt, insbesondere angeschmiedet ist. Die Fase 68 kann selbstverständlich aber auch mit einem Span erzeugenden Bearbeitungsverfahren hergestellt sein.

Figur 8 zeigt ausschnittweise einen Teil des Generators 10. Der Ständer 16 besteht einmal auf dem Ständereisen 86 und der Wechselstromwicklung 23. Die Wechselstromwicklung 23 weist nahe des Stimbereichs 14 Öffnungen 89 auf. Üblicherweise wird diese Öffnung 89 einerseits durch die Wechselstromwicklung 23 und andererseits durch den Stirnbereich des Ständereisens 68 begrenzt. Weist der Ständer 36 oder bspw. auch 48 Nuten auf, so sind in der Regel sechsunddreißig oder achtundvierzig Öffnungen 89 vorhanden. Zum weiteren besseren Verständnis der Lage der Fase 68 zum Ständereisen 86, ist die in Figur 8 dargestellte zylindrische Oberfläche 43 in die Betrachtungsebene gekippt. Es ist anhand von Figur 8 deutlich, dass ein Drehstromgenerator 10 vorgesehen ist, der einerseits ein ringzylindrisches Ständereisen 86 und einen erfindungsgemäßen Klauenpolläufer 20 hat, wobei die Fase 68 derart unter das Ständereisen 86 ragt, dass ein Teil der Fase 68 außerhalb des Ständereisens 86 verbleibt. Die Fase 68 soll mindestens 1 mm unter das Ständereisen 86 ragen. Die entsprechende Längenangabe ist das Maß I_{F,st}.

In Figur 8 ist des Weiteren angedeutet, dass der Drehstromgenerator 10 eine bestimmte Drehrichtung D hat, in der der Klauenpolläufer 20 zur Stromerzeugung gedreht wird, wobei ein jeder Klauenpol 28 bzw. 29 eine Kante 70 hat, die gegen die Drehrichtung D orientiert ist. Des Weiteren hat ein jeder Klauenpol eine Kante 73, die in Drehrichtung D orientiert ist und hier als auflaufende Kante bezeichnet ist. Die Fase 68 ist dabei jeweils auf der Seite eines jeden Klauenpols 28 bzw. 29 angeordnet, die die in Drehrichtung D orientierte Kante 73 trägt.

Beschreibungsteile, die auf einen Klauenpol 28 Bezug nehmen, sind analog auf einen Klauenpol 29 anzuwenden.

Die Erfindung ist nicht auf Polräder 26 bzw. 27 mit jeweils sechs Klauenpolen 28 bzw. 29 beschränkt, sondern gilt auch für Polradausfübrungen mit jeweils sieben oder ganz besonders acht Klauenpolen 28 bzw. 29.

Die Erfindung ist auch nicht auf Klauenpolläufer 20 beschränkt, die freie Zwischenräume 56 aufweisen, sondern auch auf solche Ausführungen anwendbar, die mittels einem hier nicht dargestellten Klauenpolverschlusses gefüllt bzw. geschlossen sind.

## Patentansprüche

1. Klauenpolläufer für eine elektrische Maschine, insbesondere Drehstromgenerator, mit zwei Polrädern (26, 27), die von einem Plattenbereich (50) ausgehende, je eine Polwurzel (53) aufweisende Klauenpole (28 bzw. 29) tragen, wobei an einem Umfang des Klauenpolläufers (20) Klauenpole (28, 29) der Polräder (26, 27) abwechselnd und zwischen den Klauenpolen Zwischenräume (90) angeordnet sind, wobei ein Klauenpol (28, 29) eine nach radial außen gerichtete zylindermantelförmige Oberfläche (43) hat, durch die eine Drehachse (65) bestimmt ist, wobei sich eine Fase (68) einerseits in eine Umfangsrichtung und andererseits in eine Kantenrichtung eines Klauenpols (28 bzw. 29) erstreckt, wobei die Fase (68) in Kantenrichtung einen Mittenabschnitt m hat, der eine die Polwurzel (53) und den frei kragenden Teil das Klanenpols (28 bzw. 29) abgrenzende Übergangsebene (59) schneidet, wobei der Mittenabschnitt m 8/10 der in Kantenrichtung orientierten Länge der Fase (68) beträgt und dass der Klauenpol (28, 29) eine in Umfangsrichtung orientierte Breite B_{K} aufweist und eine halbe Breite B_{K} auf der zylindrischen Oberfläche (43) in einer zur Drehachse (65) senkrechten Ebene des Klauenpols (28,29) eine Punkt (P) definiert, wobei in diesen Punkt (P) eine Tangente (T) einbeschreibbar ist und in der zur Drehachse (65) senkrechten Ebene zwischen der Tangente (T) und der Fase (68) ein Neigungswinkel α eingeschlossen ist, der eine Größe zwischen 15° und 25° hat und siehe folgende Seite.

2. Klauenpolläufer nach Anspruch 1, **dadurch gekennzeichent, dass** der Mittenabschnitt m 1/3 der Länge (1) der Fase (68) beträgt.

3. Klauempolläufer nach Anspruch 1 oder 2, **dadurch gekennzeichnet, dass** die Fase (68) in Kantenrichtung eine Mitte (M) hat, die nahe der Übergangsebene (59) von der Polwurzel (53) zum freikragenden Teil des Klauenpols (28 bzw. 29) liegt.

4. Klauenpolläufer nach einem der vorstehenden Ansprüche, **dadurch gekennzeichnet, dass** sich die Fase (68) in Drehachsenrichtung (65) bis zu 5 mm auf dem freikragenden Teil des Klauenpol (28 bzw. 29) erstreckt.

5. Klauenpolläufer nach Anspruch 4, **dadurch gekennzeichent, dass** sich die Fase (68) in Drehachsenrichtung (65) bis zu 2 mm auf dem freikragenden Klauenpol (28 bzw. 29) erstreckt.

6. Klauenpolläufer nach einem der vorstchenden Ansprüche, **dadurch gekennzeichnet, dass** die Fase (68) eine Breite (b_{F}) zwischen 4 mm und 6 mm hat.

7. Klauenpollänfer nach einem der vorstehenden Ansprüche, **dadurch gekennzeichent, dass** die Fase (68) eine Länge (I) zwischen 4 mm und 6 mm hat.

8. Klauenpolläufer nach einem der vorstehenden Ansprüche, **dadurch gekennzeichnet, dass** die Fase (68) eine Ebene ist, die parallel zur Drehachsenrichtung (65) oder parallel zur Kantenrichtung (73) orientiert ist.
zwischen der Fase (68) und der zylindermantelförmigen Oberfläche (43) in Richtung zum freien Ende des Klauenpols (28, 29) ein stufenförmige Übergang (80) ist.

9. Klauenpolläufer nach einem der vorstehenden Ansprüche, **dadurch gekennzeichnet,**
**dass** die Fase (68) spanlos angeformt, insbesondere angeschmiedet ist.

10. Drehstromgenerator, insbesondere für Kraftfahrzeuge, mit einem ringzylindrischen Ständereisen (86) und mit einem Klauenpolläufer (20) nach einem der vorstehenden Ansprüche, **dadurch gekennzeichnet, dass** die Fasen (68) derart unter das Ständereisen (86) ragen, dass ein Teil der Fasen (68) außerhalb des Ständereisens (86) verbleiben.

11. Drehstromgenerator nach Anspruch 10, **dadurch gekennzeichnet, dass** die Fasen (68) mindestens 1 mm unter das Ständereisen (86) ragen.

12. Drehstromgenerator nach Anspruch 10 oder 11, **dadurch gekennzeichent, dass** der Drehstromgenerator eine bestimmte Drehrichtung (D) hat, in der der Klauenpollänfer (20) zur Stromerzeugung gedreht wird, wobei ein jeder Klauenpol (28, 29) eine Kante (73) hat, die in Drehrichtung orientiert ist und eine Kante (70) hat, die gegen die Drehrichtung orientiert ist und die Fase (68) auf der Seite des Klauenpols (28,29) angeordnet ist, die die in die Drehrichtung (D) orientierte Kante (73) trägt.

## Claims

1. Claw-pole rotor for an electrical machine, in particular a three-phase generator, having two pole wheels (26, 27) which are fitted with claw poles (28 and, respectively, 29) which start from a plate region (50) and each have a pole root (53), with claw poles (28, 29) of the pole wheels (26, 27) being alternately arranged on a circumference of the claw-pole rotor (20) and interspaces (90) being arranged between the claw poles, with one claw pole (28, 29) having a cylindrical-casing-like surface (43) which is directed radially outwards and by means of which a rotation axis (65) is determined, with a chamfer (68) extending at one end in a circumferential direction and at the other end in an edge direction of a claw pole (28 or 29), with the chamfer (68) having a central section m in the edge direction, said central section intersecting a transition plane (59) which delimits the pole root (53) and the freely projecting portion of the claw pole (28 or 29), with the central section m being of 8/10ths the length of the chamfer (68) which is oriented in the edge direction, and with the claw pole (28, 29) having a width B_{K} which is oriented in the circumferential direction and half the width B_{K} defining a point (P) on the cylindrical surface (43) in a plane of the claw pole (28, 29) which is perpendicular to the rotation axis (65), it being possible for a tangent (T) to be inscribed at this point (P) and an inclination angle α being formed in the plane which is perpendicular to the rotation axis (65) between the tangent (T) and the chamfer (68), said inclination angle α being between 15° and 25°, and there being a step-like transition (80) between the chamfer (68) and the cylindrical-casing-like surface (43) in the direction of the free end of the claw pole (28; 29).

2. Claw-pole rotor according to Claim 1, **characterized in that** the central section m is 1/3 the length (1) of the chamfer (68).

3. Claw-pole rotor according to Claim 1 or 2, **characterized in that** the chamfer (68) has, in the edge direction, a centre (M) which is situated close to the transition plane (59) from the pole root (53) to the freely projecting portion of the claw pole (28 or 29).

4. Claw-pole rotor according to one of the preceding claims, **characterized in that** the chamfer (68) extends up to 5 mm over the freely projecting portion of the claw pole (28 or 29) in the direction of the rotation axis (65).

5. Claw-pole rotor according to Claim 4, **characterized in that** the chamfer (68) extends up to 2 mm over the freely projecting claw pole (28 or 29) in the direction of the rotation axis (65).

6. Claw-pole rotor according to one of the preceding claims, **characterized in that** the chamfer (68) has a width (b_{F}) of between 4 mm and 6 mm.

7. Claw-pole rotor according to one of the preceding claims, **characterized in that** the chamfer (68) has a length (1) of between 4 mm and 6 mm.

8. Claw-pole rotor according to one of the preceding claims, **characterized in that** the chamfer (68) is a plane which is oriented parallel to the direction of the rotation axis (65) or parallel to the edge (73) direction.

9. Claw-pole rotor according to one of the preceding claims, **characterized in that** the chamfer (68) is integrally formed without machining, in particular is forged on.

10. Three-phase generator, in particular for motor vehicles, having an annular-cylindrical stator iron (86) and having a claw-pole rotor (20) according to one of the preceding claims, **characterized in that** the chamfers (68) project beneath the stator iron (86) in such a way that a portion of the chamfers (68) remains outside the stator iron (86).

11. Three-phase generator according to Claim 10, **characterized in that** the chamfers (68) project at least 1 mm beneath the stator iron (86).

12. Three-phase generator according to Claim 10 or 11, **characterized in that** the three-phase generator has a specific rotation direction (D) in which the claw-pole rotor (20) is rotated in order to generate power, with each claw pole (28, 29) having an edge (73) which is oriented in the rotation direction and having an edge (70) which is oriented counter to the rotation direction, and the chamfer (68) is arranged on that side of the claw pole (28, 29) which is fitted with the edge (73) which is oriented in the rotation direction (D).

## Revendications

1. Rotor à pôles à griffes pour une machine électrique, notamment un générateur de courant triphasé, comprenant deux rotors induits (26, 27) qui comportent des pôles à griffes (28 ou 29) sortant d'une zone de plaque (50) et présentant chacun une racine de pôle (53), les pôles à griffes (28, 29) des rotors induits (26, 27) étant disposés en alternance sur un pourtour du rotor à pôles à griffes (20) et des espaces intermédiaires (90) étant disposés entre les pôles à griffes, un pôle à griffes (28, 29) possédant une surface (43) en forme de chemise cylindrique dirigée dans le sens radial vers l'extérieur, par laquelle est défini un axe de rotation (65), un chanfrein (68) s'étendant d'un côté dans une direction du pourtour et de l'autre côté dans une direction de l'arête d'un pôle à griffes (28 ou 29), le chanfrein (68) en direction de l'arête ayant une portion centrale m qui croise un plan de transition (59) délimitant la racine de pôle (53) et la partie en collerette libre du pôle à griffes (28 ou 29), la portion centrale m étant égale à 8/10^{ème} de la longueur du chanfrein (68) orientée dans la direction de l'arête et le pôle à griffes (28, 29) présentant une largeur B_{K} orientée dans la direction de l'arête et une demie largeur B_{K} définissant un point (P) sur la surface cylindrique (43) dans un plan du pôle à griffes (28, 29) perpendiculaire à l'axe de rotation (65), une tangente (T) pouvant être décrite en ce point (P) et un angle d'inclinaison α étant inclus dans le plan perpendiculaire à l'axe de rotation (65) entre la tangente (T) et le chanfrein (68), lequel a une valeur comprise entre 15° et 25° et correspond à une transition en forme de palier (80) entre le chanfrein (68) et la surface (43) en forme de chemise cylindrique en direction de l'extrémité libre du pôle à griffes (28, 29).

2. Rotor à pôles à griffes selon la revendication 1, **caractérisé en ce que** la portion centrale m correspond à 1/3 de la longueur (1) du chanfrein (68).

3. Rotor à pôles à griffes selon la revendication 1 ou 2, **caractérisé en ce que** le chanfrein (68) présente dans le sens de l'arête un centre (M) qui se trouve à proximité du plan de transition (59) de la racine du pôle (53) à la partie en collerette libre du pôle à griffes (28 ou 29).

4. Rotor à pôles à griffes selon l'une des revendications précédentes, **caractérisé en ce que** le chanfrein (68) s'étend dans le sens de l'axe de rotation (65) jusqu'à 5 mm sur la partie en collerette libre du pôle à griffes (28 ou 29).

5. Rotor à pôles à griffes selon la revendication 4, **caractérisé en ce que** le chanfrein (68) s'étend dans le sens de l'axe de rotation (65) jusqu'à 2 mm sur la partie en collerette libre du pôle à griffes (28 ou 29).

6. Rotor à pôles à griffes selon l'une des revendications précédentes, **caractérisé en ce que** le chanfrein (68) présente une largeur (b_{F}) comprise entre 4 mm et 6 mm.

7. Rotor à pôles à griffes selon l'une des revendications précédentes, **caractérisé en ce que** le chanfrein (68) présente une longueur (1) comprise entre 4 mm et 6 mm.

8. Rotor à pôles à griffes selon l'une des revendications précédentes, **caractérisé en ce que** le chanfrein (68) est un plan qui est orienté parallèlement au sens de l'axe de rotation (65) ou parallèlement au sens de l'arête (73).

9. Rotor à pôles à griffes selon l'une des revendications précédentes, **caractérisé en ce que** le chanfrein (68) est façonné sans enlèvement de copeaux, notamment par forgeage.

10. Générateur de courant triphasé, notamment pour véhicules automobiles, comprenant un fer statorique (86) et comprenant un rotor à pôles à griffes (20) selon l'une des revendications précédentes, **caractérisé en ce que** les chanfreins (68) font saillie sous le fer statorique (86) de telle sorte qu'une partie des chanfreins (68) demeure en-dehors du fer statorique (86).

11. Générateur de courant triphasé selon la revendication 10, **caractérisé en ce que** les chanfreins (68) font saillie d'au moins 1 mm sous le fer statorique (86).

12. Générateur de courant triphasé selon la revendication 10 ou 11, **caractérisé en ce que** le générateur de courant triphasé possède un sens de rotation (D) donné dans lequel tourne le rotor à pôles à griffes (20) pour générer du courant, chaque pôle à griffes (28, 29) présentant une arête (73) qui est orientée dans le sens de la rotation et une arête (70) qui est orientée dans le sens inverse de la rotation et le chanfrein (68) étant disposé du côté du pôle à griffes (28, 29) qui comporte l'arête (73) orientée dans le sens de rotation (D).
